Europäisches Patentamt

European Patent Office

Office européen des brevets

(11) Veröffentlichungsnummer: **0 302 358**

**A1**

## (12) EUROPÄISCHE PATENTANMELDUNG

(21) Anmeldenummer: **88112014.1**

(22) Anmeldetag: **26.07.88**

(51) Int. Cl.⁴: **A47J 31/54**

(30) Priorität: **06.08.87 US 82159**

(43) Veröffentlichungstag der Anmeldung:
**08.02.89 Patentblatt 89/06**

(84) Benannte Vertragsstaaten:
**AT BE CH DE ES FR GB GR IT LI LU NL SE**

(71) Anmelder: **Melitta-Werke Bentz & Sohn**
**Ringstrasse 99**
**D-4950 Minden 1(DE)**

(72) Erfinder: **Häuslein, Reinhard**
**Lange Wand 20**
**D-4950 Minden(DE)**

(74) Vertreter: **Stracke, Alexander, Dipl.-Ing. et al**
**Jöllenbecker Strasse 164**
**D-4800 Bielefeld 1(DE)**

(54) **Durchlauferhitzer für eine Kaffee- oder Teemaschine.**

(57) Beschrieben wird eine Getränkemaschine, insbesondere Kaffee- oder Teemaschine mit einem Durchlauferhitzer, der aus U-förmig ineinander gesetzten Heizrohren (24) besteht zu denen parallel Wasserleitungsrohre (23) verlegt sind, die mit den Heizrohren über Verbindungselemente (25) aus gut wärmeleitendem Material verbunden sind.

Fig. 5

EP 0 302 358 A1

## Durchlauferhitzer für eine Kaffee- oder Teemaschine

Die Erfindung betrifft eine Getränkemaschine mit einem Durchlauferhitzer zur Erhitzung und zum Transport von Frischwasser in ein Filtergefäß, wobei der Durchlauferhitzer wenigstens zwei über ein Leitungsstück hintereinander geschaltete und im wesentlichen U-förmige Heizrohre aus Metall aufweist, die ineinander gesetzt bzw. miteinander verschachtelt sind.

Eine derartige Getränkemaschine beschreibt die DE-34 19 365-C1. Sie hat sich an und für sich bewährt. Der Durchlauferhitzer besteht dort aus den Heizrohren in der genananten Anordnung, die sowohl die Heizleistung aufnehmen, wie sie auch für den Transport des zu erwärmenden Wassers dienen.

Demgegenüber liegt der Erfindung die Aufgabe zugrunde, eine Getränkemaschine mit den eingangs genannten Merkmalen vorzuschlagen, die sich insbesondere durch eine fühlbare Erhöhung der Heizleistung sowie durch eine wesentlich verbesserte Übertragung hoher Heizleistung auszeichnet.

Zur Lösung dieser Aufgabe ist die Erfindung dadurch gekennzeichnet, daß parallel zu den Heizrohren diesen benachbart Wasserleistungsrohre vorgesehen sind, die über ein Verbindungselement aus gut wärmeleitendem Material mit den Heizrohren verbunden sind.

Durch die erfindungsgemäß vorgesehene Trennung zwischen den eigentlichen Heizrohren und den Wasserleitungsrohren können die Heizrohre höher belastet werden, nämlich mit einer Leistungsaufnahme von etwa 1400 bis 1600 W. Darüberhinaus wird die Leistungsaufnahme von etwa 1400 bis 1600 W dosierter auf die Wasserleitungsrohre abgegeben. Mit dieser Auslegung kann das Wasser bei einer verhältnismäßig geringen spezifischen Belastung in der Größenordnung von 5 bis 8 $W/cm^2$ auf eine hohe Temperatur von 95 °C ± 3 °C gebracht werden. Diese Ergebnisse lassen sich mit bekannten Durchlauferhitzern von Getränkemaschine nicht erreichen.

Bevorzugte Ausgestaltung der Erfindung sind in den Unteransprüchen angegeben.

Die Erfindung wird im folgenden anhand von Ausführungsbeispielen näher erläutert, aus denen sich weitere wichtige Merkmale ergeben. Es zeigt:

Fig. 1 eine teilweise geschnittene Seitenansicht einer Getränkemaschine nach der Erfindung

Fig. 2 eine teilweise geschnittene Stirnansicht der Getränkemaschine nach Fig. 1 in Richtung des Pfeiles II der Fig. 1 gesehen

Fig. 3 eine Bodenansicht einer bevorzugten Ausführungsform des Durchlauferhitzers in Richtung des Pfeiles III von Fig. 1 gesehen

Fig. 4 eine Bodenansicht ähnlich Fig. 3 bei einer abgeänderten Ausführungsform

Fig. 5 einen Schnitt entlang der Linie V-V von Fig. 3

Fig. 6, 7 und 8 Schnitte ähnlich wie Fig. 5 von drei bevorzugten Ausführungsformen der Erfindung

Fig. 9 eine vergrößerte, teilweise abgebrochene Bodenansicht der Anordnung nach Fig. 3

Fig. 10 ein Schaltdiagramm der elektrischen Steuerung.

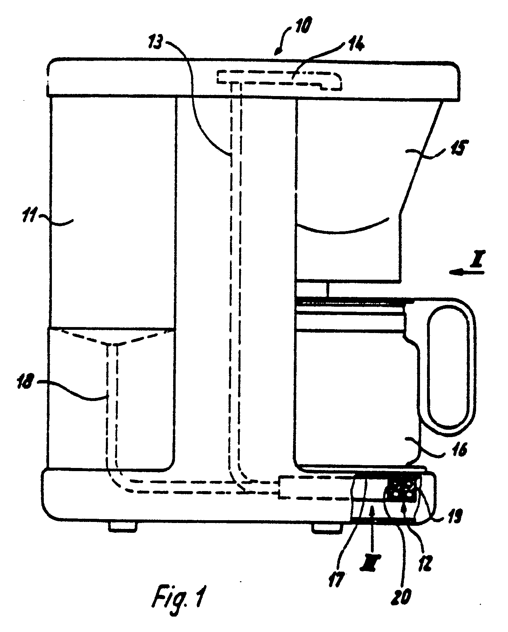

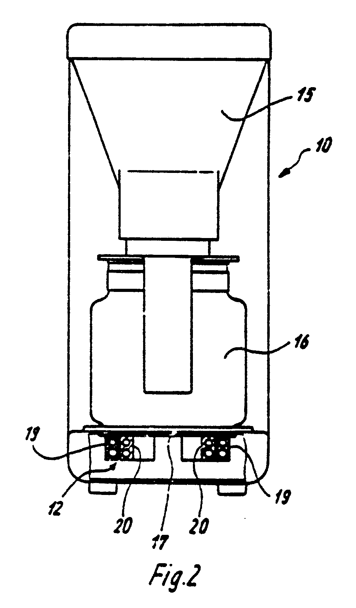

Eine in den Fig. 1 und 2 als Ganzes gezeigte Getränkemaschine 10 besitzt einen Frischwasserbehälter 11, eine Heizanordnung 12, ein Steigrohr 13, einen Überlauf 14, der an das Steigrohr 13 angeschlossen ist, ferner ein Filtergefäß 15 und eine Kanne 16, die auf eine Warmhalteplatte 17 gestellt werden kann. Der Frischwasserbehälter 11 ist mit der Heizanordnung 12 über einen Zulauf 18 verbunden.

Das Frischwasser, das im Frischwasserbehälter 11 untergebracht ist, wird nach Einschalten der Heizanordnung 12 erwärmt und durch das Steigrohr 13 und den Überlauf 14 in das Filtergefäß 15 geleitet.

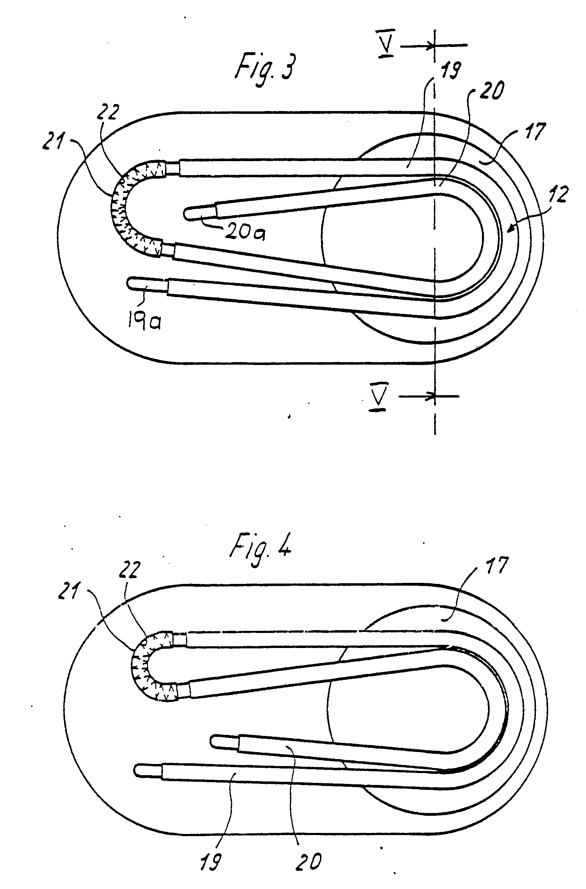

Fig. 3 zeigt, daß die Heizanordnung zwei rohrförmige Durchlauferhitzer 19 und 20 besitzt, die hintereinander geschaltet und über ein Rohrstück oder Schlauchstück 21 miteinander verbunden sind. Der Strömungsweg der reihenförmig verbundenen Durchlauferhitzer 19, 20 ist eine längliche Spirale, die am äußeren Ende 19a beginnt und am inneren Ende 20a aufhört, d.h., im Bereich des Rohr- oder Schlauchstückes ist ein spiralförmiger Körper angeordnet, um eine Verwirbelung innerhalb des Strömungsweges zu erreichen. Der Erhitzungsweg des Wassers beginnt am äußeren Ende 19a und hört am inneren Ende 20a auf.

Die in Fig. 4 gezeigte Ausführungsform unterscheidet sich von der Ausführungsform nach Fig. 3 nur dadurch, daß der Durchlauferhitzer 20 einen etwas anderen Weg nimmt, d.h., daß der Durchlauferhitzer 20 mit dem Durchlauferhitzer 19 in einer anderen Durchlaufrichtung verbunden ist. Im wesentlichen bildet der Durchlauferhitzer 19 ein äußeres U, worin der Durchlauferhitzer 20 verschachtelt ist und ein inneres U bildet. Die Ausführungsformen nach Fig. 3 und 4 zeigen, daß die Erfindung in vielfältiger Weise konstruktiv verwirklicht werden kann.

Fig. 1 und 2 zeigen, daß die Durchlauferhitzer direkt an der Unterseite der Warmhalteplatte 17 angebracht sind. Auf diese Weise dient die Heizanordnung 12 gleichzeitig zum Erhitzen des Wassers, das in das Filtergefäß 15 eingeleitet wird und über die dazwischen liegende Warmhalteplatte 17 zum Warmhalten der Kanne 16 nach der Filtration.

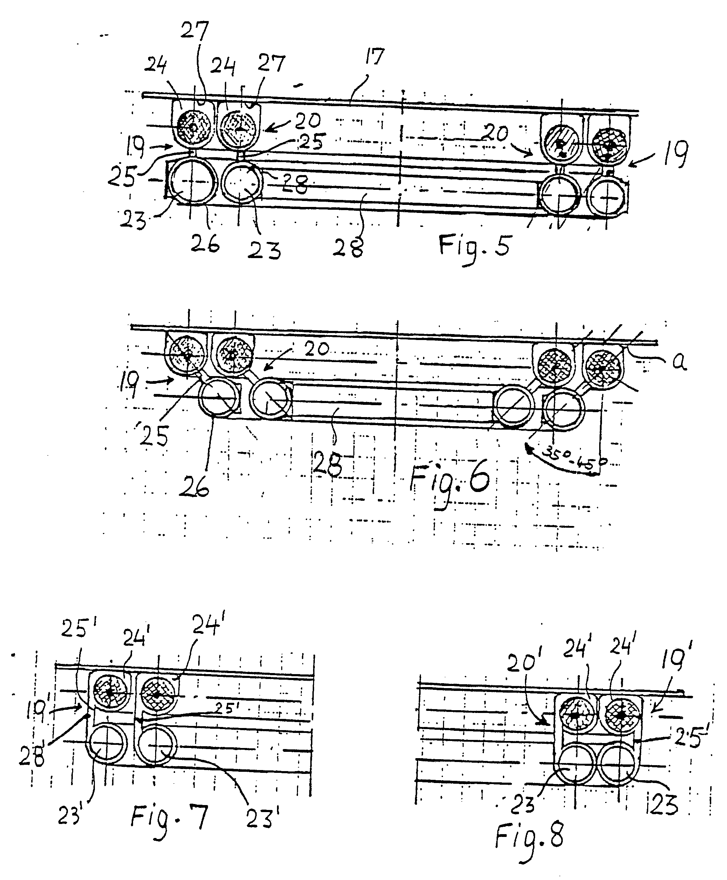

Fig. 5 zeigt, daß jeder Durchlauferhitzer 19 und 20 eine Wasserleitung 23 aufweist sowie ein neizgehäuse (Heizrohr) 24 und einen wärmeleitenden Verbindungssteg 25, der als schmaler, langer Streifen ausgebildet ist, der sich zwischen der Wasserleitung 23 und dem Heizrohr 24 erstreckt. Der Verbindungssteg 25 sorgt für eine gute und definierte Wärmeübertragung vom Heizrohr 24 zur Wasserleitung 23. In vorteilhafter Weise hat der Steg eine Höhe (gemessen entlang einer Linie, die die Längsachsen der Wasserleitung 23 und dem Heizrohr 24 verbindet) und eine Stärke (gemessen entlang einer Linie, die rechtwinklig zu den zwei Achsen ist) mit einem Quotienten von 2 : 1 zur Stärke der Wand 26 der Wasserleitung 23.

Das Gehäuse des Heizrohres 24 hat eine flache Oberfläche, die sich gegenüber der Unterseite der Warmhalteplatte 17 befindet und die vorzugsweise eine Breite von 4/5 des äußeren Durchmessers des Heizgehäuses 24 besitzt. Diese besondere Anordnung stellt sicher, daß sich das Heizgehäuse 24 in einer kompakten, guten Wärmeübertragungsverbindung zur Warmhalteplatte 17 befindet.

Die äußere Oberfläche jeder Wasserleitung 23 hat einen abgeflachten Oberflächenteil 28, und zwar rechtwinklig zur Fläche 27 des Heizgehäuses 24, der derart gestaltet ist, daß eine Thermostateinrichtung daran angelegt werden kann. Die Breite des flachen Oberflächenteiles 28 beträgt zumindest 4/5 des äußeren Durchmessers der Wasserleitung 23. Jeder Durchlauferhitzer 19 oder 20 besteht daher aus einer einstückig hergestellten Doppelrohrkonstruktion, deren Rohre 23 und 24 außen umlaufende Flächen 27 und 28 aufweisen und mit einem Steg 25 verbunden sind. Das so definierte Rohrprofil wird vorzugsweise aus Aluminium hergestellt. Die profilierten Durchlauferhitzer 19 und 20 gestatten in besonderer Weise das Ineinanderfügen zweier Elemente gleichen Profils aber unterschiedlicher Biegeradien. Dadurch entsteht eine leicht zu montierende, kompakte Bauweise für einen Durchlauferhitzer mit entsprechend hoher Leistung.

Während bei der Anordnung nach Fig. 5 jede Wasserleitung 23 sich senkrecht unter dem zugehörigen Heizgehäuse 24 erstreckt, ist bei der Ausführungsform nach Fig. 6 die gedachte Linie a, die die mittlere Achse des Heizgehäuses 24 mit der mittleren Achse der zugehörigen Wasserleitung verbindet, um etwa 35 bis 45° zur Senkrechten geneigt. Der Steg ist in ähnlicher Weise geneigt. Durch eine solche geneigte, seitlich versetzte Stellung wird eine wirksamere Verschachtelung der beiden Erhitzer 19 und 20 erreicht, was zu einer insgesamt verringerten Höhe der Anordnung führt.

Die Fig. 7 und 8 zeigen, daß jeder Erhitzer 19′ und 20′ ein Heizgehäuse 24′ besitzt, das durch einen wärmeleitenden Steg 25′ mit der Wasserleitung 23′ verbunden ist. Der Steg 25′ verläuft tangential zum Heizgehäuse 24′ und zur Wasserleitung 23′. Die äußere Fläche 28′ des Steges 25′ hat eine flache Gestalt und ähnlich wie bei den flachen Oberflächen nach Fig. 5 und 6 dient er zur Kontaktgabe mit einem nicht gezeigten Thermostat. Nach Fig. 7 sind die zwei Erhitzer 19′ und 20′ derart angeordnet, daß der Verbindungssteg sich auf der gleichen (linken) Seite der zwei Erhitzer befindet, während in der Ausführungsform nach Fig. 8 die Verbindungsstege 25′ einander abgewandt sind. d.h., sie sind spiegelbildlich angeordnet.

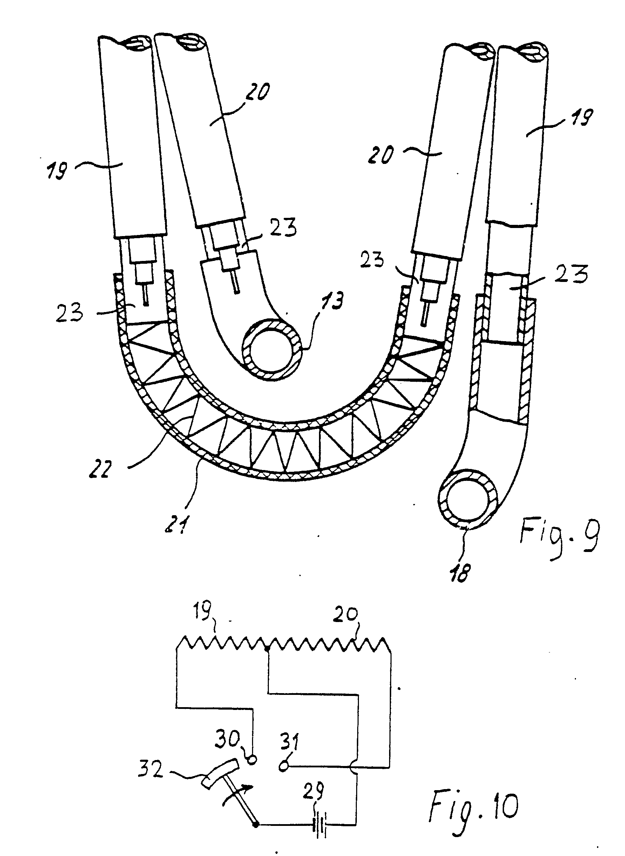

Fig. 9 zeigt im einzelnen das rohrförmige Leitungsstück 21. In diesem befindet sich eine Leiteinrichtung, die das hindurchfließende Wasser verwirbelt. Die Leiteinrichtung besteht aus einem korrosions- und heißwasserbeständigem Material. Sie besteht vorzugsweise aus einem oder mehreren schraubenförmigen, federförmigen Teilen 22 aus rostfreiem Stahl. In der dargestellten Ausführungsform ist das rohrförmige Leitungsstück 21 ein biegsamer Schlauch, der mit dem Auslaßende des stromaufgelegenen Erhitzers 19 und dem Einlaßende des stromabgelegenen Erhitzers 20 verbunden ist. Die Teile 22 bewirken, daß das bereits im ersten Durchlauferhitzer 19 erwärmte Wasser vor der Einleitung in den zweiten Durchlauferhitzer 20 durchmischt wird, so daß eine gleichförmigere und möglicherweise schnellere Aufheizung des Wassers zur Brühtemperatur erreicht wird.

Die Durchlauferhitzer 19 und 20 können die gleiche Heizleistung haben; sie können jedoch auch ungleiche Heizleistungen haben. Im Falle der zwei Erhitzer 19 und 20 mit verschiedener Heizleistung sollte der Erhitzer mit der größeren Heizleistung der zweiter oder stromabgelegene Erhitzer sein.

Die Schaltungsanordnung der Heizanordnung 12 kann alternativ so ausgebildet sein, daß entweder beide Erhitzer 19 und 20 gleichzeitig angeschaltet und ausgeschaltet werden oder daß beide Erhitzer wahlweise gesteuert werden, wie in Fig. 10 gezeigt. Diese Figur zeigt, daß die beiden Erhitzer 19 und 20 elektrisch direkt miteinander und mit einer Spannungsquelle 29 verbunden sind. Das eine Ende des Erhitzers 19 ist mit einem feststehenden Kontakt 30 verbunden, während das andere Ende des Erhitzers 20 mit einem feststehenden Kontakt 31 verbunden ist. Ein drehbarer Kontakt 32 ist ständig mit der Spannungsquelle 29 verbunden und kann die folgenden vier Positionen einnehmen:

In einer ersten oder ausgeschalteten Lage ist der drehbare Kontakt nicht in Eingriff mit den beiden feststehenden Kontakten 30 und 31; in einer zweiten Lage ist der drehbare Kontakt 32 nur in Eingriff mit dem feststehenden Kontakt 30; in einer dritten Lage ist der drehbare Kontakt 32 in Eingriff mit beiden feststehenden Kontakten 30 und 31, während in einer vierten Lage der drehbare Kontakt 32 in Eingriff mit dem feststehenden Kontakt 31 ist. Daraus ergibt sich, daß in der ersten Lage beide Erhitzer 19 und 20 abgeschaltet sind und in der zweiten Lage nur der Er hitzer 19 eingeschaltet ist; in der dritten Lage sind beide Erhitzer 19 und 20 eingeschaltet, während in der vierten Lage nur der Erhitzer 20 eingeschaltet ist.

**Ansprüche**

1. Getränkemaschine (10) mit einem Durchlauferhitzer (12) zur Erhitzung und zum Transport vonFrischwasser in ein Filtergefäß (15), wobei der Durchlauferhitzer (12) wenigstens zwei über ein Leitungsstück (21) hintereinander geschaltete und im wesentlichen U-förmige Heizrohre (19, 20, 24) aus Metall aufweist, die ineinander gesetzt bzw. miteinander verschachtelt sind,
**dadurch gekennzeichnet,**
daß parallel zu den Heizrohren (19, 20, 24) und diesen benachbart Wasserleitungsrohre (23) vorgesehen sind, die über ein Verbindungselement (25) aus gut wärmeleitenden Material mit den Heizrohren (19, 20) verbunden sind.

2. Getränkemaschine nach Anspruch 1,
**dadurch gekennzeichnet,**
daß das Verbindungselement (25) als Steg ausgebildet ist, wobei der Quotient aus der Höhe und Dicke des Steges etwa gleich 2 : 1 ist.

3. Getränkemaschine nach Anspruch 1 oder 2,
**dadurch gekennzeichnet,**
daß der Durchlauferhitzer (12) im wesentlichen horizontal angeordnet ist, wobei die Wasserleitungsrohre (23) im wesentlichen lotrecht unter den Heizrohren (19, 20;24) angeordnet sind.

4. Getränkemaschine nach Anspruch 1,
**dadurch gekennzeichnet,**
daß das Verbindungselement (25) als Steg ausgebildet ist, das die Heizrohre (19, 20;24) und die Wasserleitungsrohre (23) tangential miteinander verbindet.

5. Getränkemaschine nach einem der Ansprüche 1 bis 4,
**dadurch gekennzeichnet,**
daß die Wasserleitungsrohre (23), die Heizrohre (19, 20; 24) und die Verbindungselemente (25) einstückig extrudiert sind.

6. Getränkemaschine nach einem der Ansprüche 1 bis 5 mit einer Warmhalteplatte (17) über dem Durchlauferhitzer (12),
**dadurch gekennzeichnet,**
daß die Heizrohre (19, 20;24) mit einer flachen Oberseite (27) an der Unterseite der Warmhalteplatte (17) anliegen.

7. Getränkemaschine nach Anspruch 6,
**dadurch gekennzeichnet,**
daß die flache Oberseite (27) der Heizrohre (19, 20;24) eine Breite hat, die wenigstens 4/5 des Durchmessers der Heizrohre (19, 20;24) beträgt.

8. Getränkemaschine nach einem der Ansprüche 1 bis 7,
**dadurch gekennzeichnet,**
daß die Wasserleitungsrohre (23) eine sich in ihrer Längsrichtung erstreckende ebene Außenfläche haben.

9. Getränkemaschine nach Anspruch 8,
**dadurch gekennzeichnet,**
daß die eben Außenfläche der Wasserleitungsrohre (23) eine Breite hat, die wenigstens 4/5 des Durchmessers der Heizrohre (19, 20;24) beträgt.

10. Getränkemaschine nach Anspruch 1,
**dadurch gekennzeichnet,**
daß die Wasserleitungsrohre (23) bezüglich der Heizrohre (19, 20;24) seitlich versetzt und unter den Heizrohren (19, 20; 24) angeordnet sind.

11. Getränkemaschine nach Anspruch 10,
**dadurch gekennzeichnet,**
daß der Winkel zwischen der Verbindungslinie zwischen den Heizrohren (19, 20; 24) und den Wasserleitungsrohren (23) und der Lotrechten etwa 45° beträgt.

Fig. 1

Fig.2

**POOR QUALITY**

Fig. 3

Fig. 4

Fig. 5

Fig. 6

Fig. 7

Fig. 8

Fig. 9

Fig. 10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-U-8 516 331 (SIEMENS AG) <br> * Seite 5, Zeile 6 - Seite 6, Zeile 19; Figuren 1-3 * <br> --- | 1 | A 47 J 31/54 |
| Y,D | DE-C-3 419 365 (MELITTA-WERKE BENTZ & SOHN) <br> * Insgesamt * | 1-3,5,8 | |
| Y | | 4,6,10, 11 | |
| Y | DE-A-2 647 152 (BOSCH-SIEMENS HAUSGERÄTE) <br> * Seite 4, Zeile 10 - Seite 5, Zeile 9; Figur 1 * <br> --- | 1-3,5,8 | |
| Y | DE-A-3 424 469 (SIEMENS AG) <br> * Seite 6, Zeilen 16-23; Figuren 1-5 * <br> --- | 4,6 | |
| Y | DE-U-8 535 332 (BOSCH-SIEMENS HAUSGERÄTE) <br> * Seite 4, Zeilen 19-23; Figur 2 * <br> --- | 10,11 | |
| | | | RECHERCHIERTE SACHGEBIETE (Int. Cl.4) |
| A | DE-U-8 605 223 (TÖRK & HILLINGER GmbH) <br> * Insgesamt * <br> ----- | 1,5-11 | A 47 J |

Der vorliegende Recherchenbericht wurde für alle Patentansprüche erstellt

| Recherchenort | Abschlußdatum der Recherche | Prüfer |
|---|---|---|
| DEN HAAG | 11-11-1988 | MEINDERS H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

...............................................................
& : Mitglied der gleichen Patentfamilie, übereinstimmendes Dokument

EPO FORM 1503 03.82 (P0403)